# EUROPÄISCHE PATENTANMELDUNG

(11) **EP 4 438 288 A1**
(43) Veröffentlichungstag der Anmeldung: **02.10.2024**
(21) Anmeldenummer: 24165739.4
(22) Anmeldetag: 25.03.2024
(51) Int. Cl.: B32B 1/08, B32B 5/02, B32B 27/12, B32B 27/20, B32B 27/22, B32B 27/30, F16L 11/08

(54) **FLEXIBLE SCHLAUCHLEITUNG**

(30) Priorität: 28.03.2023 DE 202023101553 U
(71) Anmelder: REHAU Industries SE & Co. KG, 95111 Rehau (DE)
(72) Erfinder: Auer, Peter, 90765 Fürth (DE); Göbel, Christoph, 95448 Bayreuth (DE); Hübner, Christian, 95466 Weidenberg (DE); Lorenscheit, Dagmar, 95194 Regnitzlosau (DE); Schneider, Carolin, 08491 Limbach OT Buchwald (DE); Wazlawik, Klaus, 95030 Hof (DE)

(57) **Zusammenfassung**

Die Erfindung betrifft eine flexible Schlauchleitung, insbesondere zur Bewässerung von Gärten, Grünanlagen und dergleichen, mit einer polymeren, insbesondere PVC enthaltenden Tragschicht (1), einer die Tragschicht (1) umgebenden Armierungsschicht (2) und optional einer die Armierungsschicht (2) umgebenden Außenschicht (5) aus polymerem Material. Erfindungsgemäß enthält die Tragschicht (1) und/oder die Außenschicht (5) als Füllstoff ein aus Fruchtkern- und/oder -schalenmaterial hergestelltes Pulver (6), insbesondere Olivenkernpulver.

## Beschreibung

Die Erfindung betrifft eine flexible Schlauchleitung, insbesondere zur Bewässerung von Gärten, Grünanlagen und dergleichen, mit
- einer polymeren, insbesondere PVC enthaltenden Tragschicht,
- einer die Tragschicht umgebenden Armierungsschicht und
- optional einer die Armierungsschicht umgebenden Außenschicht aus polymerem Material.

Schläuche zur Bewässerung von Gärten, Grünanlagen, Balkon- oder Terrassenpflanzen oder dergleichen, werden z.B. aus mit Weichmachern versehenem Polyvinylchlorid (PVC) oder Gummimaterialien hergestellt, um die gewünschte Flexibilität sicherstellen zu können. PVC zeichnet sich durch einen günstigen Preis und eine gute Alterungsbeständigkeit aus. Regelmäßig enthält die Tragschicht und/oder die Außenschicht zusätzlich Füllstoffe, insbesondere Calciumcarbonat (z.B. Kreide). Calciumcarbonat hat sich zwar grundsätzlich in der Praxis als Füllstoff bewährt und wird entsprechend häufig eingesetzt, führt jedoch auch zu vergleichsweise hohen Materialdichten der Tragschicht bzw. Außenschicht. Dies erschwert die Handhabung der entsprechenden Schlauchleitungen. Darüber hinaus wird Calciumcarbonat als anorganischer Füllstoff hauptsächlich im Tagebau abgebaut und ist daher auch ökologisch nicht unbedenklich. Ferner setzt der Einsatz von Calciumcarbonat die Materialeigenschaften des Polymermaterials (häufig PVC) der Trag- bzw. Außenschicht herab und ist zusätzlich vergleichsweise abrasiv gegenüber den Extrusionswerkzeugen, mit denen entsprechende Schlauchleitungen in der Regel hergestellt werden.

Vor diesem Hintergrund liegt der Erfindung die Aufgabe zugrunde, eine Schlauchleitung mit den eingangs beschriebenen Merkmalen anzugeben, welche sich durch ein vergleichsweise geringes Gewicht auszeichnet und gleichzeitig Verarbeitungsvorteile aufweist.

Erfindungsgemäß wird diese Aufgabe dadurch gelöst, dass die Tragschicht und/oder die Außenschicht als Füllstoff ein aus Fruchtkern- und/oder -schalenmaterial hergestelltes Pulver, insbesondere Olivenkernpulver, enthält. Alternativ zu Oliven können z.B. auch die Kerne oder Schalen von Pfirsischen, Aprikosen, Pflaumen, Nüssen und/oder Kirschen oder dergl. als Früchte, d.h. als organisches Substrat für die erfindungsgemäße Pulverherstellung zum Einsatz kommen. Überraschend hat sich im Rahmen der Erfindung gezeigt, dass Fruchtkern- und/oder -schalen pulver, insbesondere Olivenkernpulver, grundsätzlich als Füllmaterial für gattungsgemäße Schlauchleitungen geeignet ist und zu einer deutlichen Herabsetzung der Dichte des Tragschicht- bzw. Außenschichtmaterials beiträgt. Hierdurch wird die Schlauchleitung entsprechend leichter, voraus sich Vorteile hinsichtlich deren Handhabung ergeben. Insbesondere kann die Dichte der Tragschicht- und/oder Außenschicht weniger als 1,3 g/cm³, vorzugsweise weniger als 1,25 g/cm³, z.B. weniger als 1,2 g/cm³, insbesondere weniger als 1,18 g/cm³ betragen. Im Vergleich hierzu beträgt die entsprechende Dichte beim Einsatz eines konventionellen CaCOa-Füllstoffes in der Regel mehr als 1,4 g/cm³. Olivenkerne sind der Samen des Olivenbaums, auch Echter Ölbaum genannt. Im Rahmen der Erfindung hat sich ferner überraschenderweise herausgestellt, dass neben den Dichtevorteilen auch der Verschleiß von Werkzeugen zur Herstellung der entsprechenden Schlauchleitungen reduziert werden kann, da der erfindungsgemäße Füllstoff nur eine geringe abrasive Wirkung aufweist. Dies führt auch zu einer leichteren Verarbeitung des Tragschicht- bzw. Außenschichtmaterials, z.B. während einer Extrusion zur Herstellung der Schlauchleitung, so dass z.B. die Schlauchleitungsherstellung mit einer vergleichsweise hohen Extrusionsgeschwindigkeit durchgeführt werden kann. Überdies fallen Fruchtkerne und -schalen häufig als Neben-/Abfallprodukt in der Lebensmittelindustrie an und werden somit erfindungsgemäß einer nachhaltigen, ökologisch vorteilhaften weiteren Verwendung zugeführt. Ferner sind Olivenkerne ein reines Bioprodukt (nachwachsender Rohstoff), so dass sich auch eine verbesserte CO₂-Bilanz ergibt. Zusätzlich ermöglicht der Einsatz von Fruchtkern- bzw. -schalenmaterial, insbesondere Olivenkernpulver, je nach Einsatzmenge, einen Mattierungs- oder Strukturierungseffekt der Oberfläche von Trag- bzw. Außenschicht, wodurch sich beispielsweise ohne zusätzliche Additive eine häufig gewünschte Mattierung erreichen lässt. Insgesamt ergeben sich somit beim erfindungsgemäßen Einsatz von Fruchtkern- bzw. -schalenpulver, insbesondere Olivenkernpulver, überraschenderweise eine ganze Reihe von Vorteilen.

Zweckmäßigerweise beträgt der Gewichtsanteil des Pulvers in der Tragschicht und/oder der Außenschicht 5 - 40 %, vorzugsweise 10 - 30 %, z.B. 15 - 25 % beträgt. Hierdurch können die bereits erwähnten Vorteile des erfindungsgemäßen Pulvers in signifikanter Weise genutzt werden. Die durchschnittliche Partikelgröße des Pulvers kann 1 - 100 µm, vorzugsweise 1 - 50 µm, z.B. 5 - 30 µm betragen. Dies ermöglicht eine gleichmäßige Verteilung der Pulverpartikel in der entsprechenden Polymermatrix. In vorteilhafter Weise ist das Pulver zumindest im Wesentlichen gleichmäßig verteilt in die Matrix der Tragschicht und/oder Außenschicht eingebettet. Im Wesentlichen gleichmäßig verteilt meint insbesondere, dass die Abweichung des Gewichtsanteils des Pulvers in einer Probe der Trag- bzw. Außenschicht, die mindestens 1 cm³ Material umfasst, maximal 20 %, insbesondere maximal 10 %, bevorzugt maximal 5 % im Vergleich zum entsprechenden Gewichtsanteil-Mittelwert des Pulvers im Tragschicht- bzw. Außenschichtmaterial beträgt.

Vorzugsweise enthält die Tragschicht und/oder die Außenschicht biobasiertes PVC. Biobasiertes PVC kann beispielsweise aus organischen Abfällen, wie z.B. Forstabfällen, Gras, Maisabfällen etc, gewonnen werden, welche über Biogas zu biobasiertem Ethylen verarbeitbar sind. Hieraus kann dann biobasiertes PVC hergestellt werden.

Im Rahmen der Erfindung liegt es ferner, dass die Tragschicht und/oder die Außenschichteinen biobasierten Weichmacher enthält. Bei diesem biobasierten Weichmacher kann es sich insbesondere um ein Sojabohnenölderivat, epoxidiertes Sojabohnenöl (ESO) und/oder ein Rizinusölderivat handeln. Zweckmäßigerweise weist die Tragschicht und/oder die Au-βenschicht eine Härte Shore A von 60 bis 95, insbesondere 75 bis 85, auf. Die Härte Shore A wird hierbei z.B. nach DIN EN ISO 868 ermittelt (z.B. an 2 mm dicken Press- oder Spritzgussplatten, 3-fach geschichtet, Ablesezeit 1 bis 3 sec). Der Gewichtsanteil des Weichmachers in der Tragschicht und/oder der Außenschicht beträgt zweckmäßigerweise 20 bis 40 %, z.B. 25 bis 30 %.

Zwecks Einfärbung kann ferner die Tragschicht und/oder die Außenschicht Farbpigmente, insbesondere Titandioxid, anorganische Pigmente, organische Pigmente oder organische Farbstoffe enthalten. Der Gewichtsanteil der Farbstoffe in der jeweiligen Schicht beträgt vorzugsweise 1 - 5 %, insbesondere 1,5 - 3 %

Im Rahmen der Erfindung liegt es generell ferner, dass die Tragschicht die innerste Schicht der Schlauchleitung ist, welche entsprechend mit dem zu transportierenden Fluid beaufschlagt wird. Alternativ kann jedoch auch innenseitig an die Tragschicht mindestens eine Innenschicht anschließen, die bspw. frei von PVC ist. Ferner kann die Außenschicht die äußerste Schicht der Schlauchleitung darstellen. Alternativ kann die Außenschicht jedoch auch von einer oder mehreren Schichten umgeben sein. Die Armierungsschicht kann, vorzugsweise diagonal gewickelte und/oder geflochtene, Filamente aufweisen. Die polymeren Schichten werden zweckmäßigerweise mittels eines Polymerverarbeitungsverfahren, insbesondere mittels Extrusion hergestellt.

Die erfindungsgemäße Schlauchleitung kann, wie bereits erwähnt, insbesondere zur Bewässerung von Gärten, Grünanlagen oder dergleichen eingesetzt werden. Ein anderweitiger Einsatz, beispielsweise im Industriebereich bzw. ganz allgemein zum Transport von Nutz- oder Trinkwasser, z.B. auch im Sanitärbereich, wird hierdurch jedoch selbstredend nicht ausgeschlossen.

Im Folgenden wird die Erfindung anhand einer lediglich ein Ausführungsbeispiel darstellenden Zeichnung erläutert. Es zeigen schematisch:
- Fig. 1: eine Seitenansicht eines Ausschnittes eines erfindungsgemäßen Schlauches und
- Fig. 2: einen Querschnitt durch den in Fig. 1 dargestellten Schlauch.

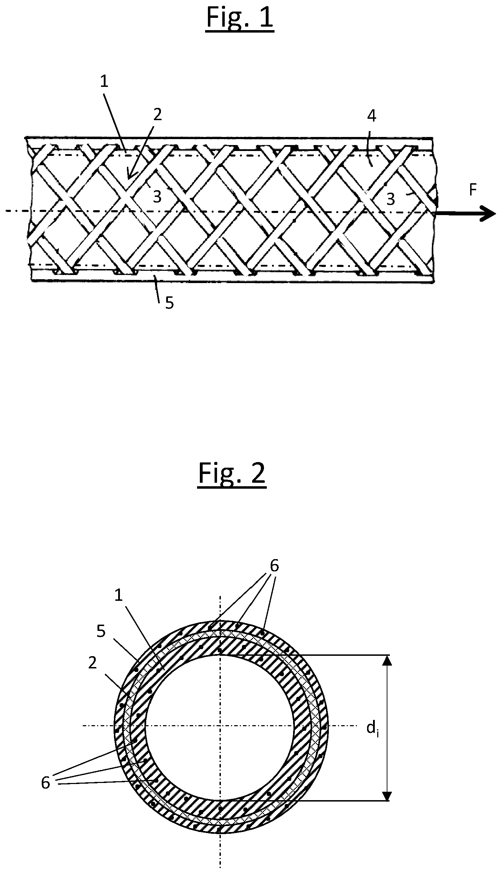

In den Fig. 1 und 2 ist eine flexible Schlauchleitung, z.B. in Form eines Gartenschlauches dargestellt, welcher zum Transport von Nutz- bzw. Trinkwasser F zwecks Gartenbewässerung eingesetzt wird. Die Schlauchleitung weist als innerste Schicht eine biobasiertes PVC enthaltende Tragschicht, einer die Tragschicht 1 umgebende Armierungsschicht 2 und eine die Armierungsschicht 2 umgebende Außenschicht 5 auf, welche ebenfalls biobasiertes

PVC enthält. Die Armierungsschicht 2 ist aus diagonal gewickelten Filamenten in Form von Fäden 3 aufgebaut. Im Ausführungsbeispiel ist die Armierungsschicht 2 offen gestaltet, d.h. zwischen den einzelnen sich überkreuzenden Fäden 3 verbleiben Freiräume 4, so dass die Schlauchleitung bei innerer Druckbelastung "atmen" kann. Die Tragschicht 1 und die Außenschicht 5 enthalten erfindungsgemäß als Füllstoff Olivenkernpulver 6, wobei die durchschnittliche Partikelgröße dieses Pulvers 6 im Bereich von 5 - 30 µm liegt (die Pulverpartikel 6 sind in der Fig. 2 lediglich exemplarisch und stark vergrößert dargestellt). Der Gewichtsanteils des Pulvers 6 in der Tragschicht 1 sowie in der Außenschicht 5 beträgt 10 - 30 %. Es ist erkennbar, dass das Pulver 6 zumindest im Wesentlichen gleichmäßig verteilt in die Matrix der Tragschicht 1 und auch Außenschicht 5 eingebettet ist. Die Dichte des Tragschicht- und auch Außenschichtmaterials beträgt weniger als 1,2 g/cm³.

Zur Gewährleistung der gewünschten Flexibilität der Schlauchleitung enthält die Tragschicht 1 sowie auch die Außenschicht 5 einen biobasierten Weichmacher, z.B. ESO. Die Tragschicht 1 und auch die Außenschicht 5 weisen jeweils eine Härte Shore A von 70 bis 80 auf. Zur Einfärbung enthalten die Tragschicht und die Außenschicht 5 zusätzlich Farbpigmente, insbesondere Titandioxid, anorganische Pigmente, organische Pigmente oder organische Farbstoffe. Beide polymeren Schichten 1, 5 sind mittels Extrusion hergestellt. Aus Fig. 2 ist ersichtlich, dass die Tragschicht 1 im Ausführungsbeispiel einen Innendurchmesser dᵢ von 10 - 15 mm (z.B. ½ Zoll) aufweist.

## Patentansprüche

1. Flexible Schlauchleitung, insbesondere zur Bewässerung von Gärten, Grünanlagen und dergleichen, mit
- einer polymeren, insbesondere PVC enthaltenden Tragschicht (1),
- einer die Tragschicht (1) umgebenden Armierungsschicht (2) und
- optional einer die Armierungsschicht (2) umgebenden Außenschicht (5) aus polymerem Material,
**dadurch gekennzeichnet, dass** die Tragschicht (1) und/oder die Außenschicht (5) als Füllstoff ein aus Fruchtkern- und/oder -schalenmaterial hergestelltes Pulver (6), insbesondere Olivenkernpulver, enthält.

2. Schlauchleitung nach Anspruch 1, **dadurch gekennzeichnet, dass** der Gewichtsanteil des Pulvers (6) in der Tragschicht (1) und/oder der Außenschicht (5) 5 - 40 %, vorzugsweise 10 - 30 % beträgt.

3. Schlauchleitung nach Anspruch 1 oder 2, **dadurch gekennzeichnet, dass** die durchschnittliche Partikelgröße des Pulvers (6) 1 - 100 µm, vorzugsweise 5 - 30 µm, beträgt.

4. Schlauchleitung nach einem der Ansprüche 1 bis 3, **dadurch gekennzeichnet, dass** das Pulver (6) zumindest im Wesentlichen gleichmäßig verteilt in die Matrix der Tragschicht (1) und/oder Außenschicht (5) eingebettet ist.

5. Schlauchleitung nach einem der Ansprüche 1 bis 4, **dadurch gekennzeichnet, dass** die Tragschicht (1) und/oder die Außenschicht (5) biobasiertes PVC enthält.

6. Schlauchleitung nach einem der Ansprüche 1 bis 5, **dadurch gekennzeichnet, dass** die Tragschicht (1) und/oder die Außenschicht (5) einen biobasierten Weichmacher enthält.

7. Schlauchleitung nach einem der Ansprüche 1 bis 6, **dadurch gekennzeichnet, dass** die Tragschicht (1) und/oder die Außenschicht (5) eine Härte Shore A von 60 bis 95, insbesondere 75 bis 85, aufweist.

8. Schlauchleitung nach einem der Ansprüche 1 bis 7, **dadurch gekennzeichnet, dass** die Tragschicht (1) die innerste Schicht der Schlauchleitung ist.

9. Schlauchleitung nach einem der Ansprüche 1 bis 8, **dadurch gekennzeichnet, dass** die Tragschicht und/oder die Außenschicht (5) Farbpigmente, insbesondere Titandioxid, anorganische Pigmente, organische Pigmente oder organische Farbstoffe enthält.

10. Schlauchleitung nach einem der Ansprüche 1 bis 9, dass die Armierungsschicht (6), vorzugsweise diagonal gewickelte und/oder geflochtene, Filamente (3) aufweist.

11. Schlauchleitung nach einem der Ansprüche 1 bis 10, **dadurch gekennzeichnet, dass** die polymeren Schichten (1, 5) mittels eines Polymerverarbeitungsverfahrens, insbesondere mittels Extrusion hergestellt sind.
